# EUROPÄISCHE PATENTSCHRIFT

(11) **EP 1 045 143 B1**
(45) Veröffentlichungstag und Bekanntmachung des Hinweises auf die Patenterteilung: **06.07.2005**
(21) Anmeldenummer: 00106527.5
(22) Anmeldetag: 27.03.2000
(51) Int. Cl.: F04B 23/10, F04B 53/18, F04B 17/03

(54) **Elektrohydraulisches Motorpumpenaggregat**
Hydraulic motor-pump unit
Ensemble moto-pompe hydraulique

(30) Priorität: 16.04.1999 DE 29906881 U
(43) Veröffentlichungstag der Anmeldung: 18.10.2000
(73) Patentinhaber: HAWE Hydraulik GmbH & Co. KG, 81673 München (DE)
(72) Erfinder: Neumair, Georg, Dipl.-Ing. (FH), 85402 Thalhausen (DE); Lörner, Gerhard, 85386 Eching (DE)
(74) Vertreter: Grünecker, Kinkeldey, Stockmair & Schwanhäusser Anwaltssozietät

(56) Entgegenhaltungen:
- EP-A- 0 541 337
- CH-A- 596 697
- DE-A- 3 839 689
- DE-A- 19 652 706
- DE-U- 29 802 441
- US-A- 5 261 796

## Beschreibung

Die Erfindung betrifft ein elektrohydraulisches Motorpumpenaggregat der im Oberbegnff des Anspruchs 1 angegebenen Art.

Bei dem mobilen, aus DE-U-295 19 941 bekannten Aggregat schließt der Tragkörper das Ölreservoir ab und ist als Niederdruckstufe eine Zahnradpumpe an der freiliegenden Seite des Tragkörpers montiert. Der Elektromotor ist mit seinem Statorwicklungsteil über an der Innenwand des Gehäuses angebrachte Stege im Gehäuse gelagert. Obwohl die Baugröße des Aggregats in Richtung der Motorwelle, auch wegen des relativ langen Statorwicklungsteils, groß ist, ist das Fassungsvermögen des Reservoirs relativ beschränkt. Der Statorwicklungsteil ist in Richtung der Motorwelle lang und schwer, weil - wie üblich - ein Standardelektromotor verwendet wird, bei dem sich die Länge des Statorwicklungsteils nach dem im Gehäuse genutzten Einbaudurchmesser richtet. Derartige mobile Aggregate sollten tragbar sein. Das Gewichtslimit beschränkt wegen des schweren Elektromotors und des Gewichts des Tragkörpers die Nutzgröße des Ölreservoirs. Andererseits gilt für mobile Aggregate eine Grenze der Motorleistung, weil der Anlaufstrom übliche 16 A-Sicherungen bei 230 V (oder 30 A-Sicherungen bei 110 V) nicht auslösen soll, wenn das Aggregat an das normale Stromnetz angeschlossen wird. Die erforderliche Ölmenge und die für Dauerbetrieb notwendige Kühlleistung bestimmen wiederum die Gehäuseabmessungen, zu denen ein kleiner und leichter Standard-Elektromotor nicht passt oder gewichtssteigernde und teure Einbaumaßnahmen bedingt.

Bei einem aus DE-U-298 02 441 bekannten, mobilen Aggregat ist der Elektromotor ein Standard-Gleichstrom-Kollektormotor, der eine Kapselung besitzt und mit dieser Kapselung weitgehend versenkt in das das Reservoir begrenzende Gehäuse eingebaut ist. In der Kapselung ist der Stator oder Magnetteil des Kollektormotors direkt festgelegt.

Bei einem aus CH-B-596 697 bekannten Aggregat ist ein mantelgekühlter Drehstrommotor vorgesehen, der mit Luft außen gekühlt wird und nicht im Öl läuft. Es handelt sich um einen Standardmotor. Das Aggregat ist für stationären Einsatz und nicht tragbar ausgelegt.

Bei einem aus DE-A-38 39 689 bekannten Aggregat, welches gemäß dem Oberbegriff des Anspruches 1 ausgebildet ist, wird ein Standard-Drehstrom- oder Wechselstrommotor als Antriebselement für die Pumpenstufen benutzt. Am Gehäuse kann ein Gehäuseteil angebracht werden, um einen zusätzlichen Ölraum zu schaffen. Der Statorwicklungsteil ist in einer wärmeableitenden, verdickten Ringfassung des Gehäuses mittels Befestigungselementen festgelegt.

Aus EP-A-541 337 und US-A-5 261 796 ist der Statorwicklungsteil des Elektromotors so im Gehäuse festgelegt, dass das Öl den Statorwicklungsteil außen umströmt Bei einem aus EP-A-509 724 bekannten Aggregat ist der Statorwicklungsteil mit Distanzelementen an der Innenwand des Gehäuses festgelegt.

Bei einem aus DE-A-196 52 706 bekannten Aggregat ist der Motor mit einem eigenen Motorgehäuse im Öl gelagert und mit Innenluft gekühlt.

Bei einem aus DE-A-274 88 97 bekannten Aggregat ist der Elektromotor in einem eigenen Gehäuse außen an das das Ölreservoir enthaltende Gehäuse angeflanscht.

Im mobilen Einsatz dient ein solches Aggregat zur Versorgung beispielsweise eines Drehmomentschräubers, eines Nietgeräts oder mobiler Hub- oder Versetzgeräte bzw. Unfall-Blechscheren. Das in dem Gehäuse bevorratete Öl ist beispielsweise Hydrauliköl, das als Arbeitsmedium und Schmiermedium fungiert. Es könnte jedoch auch ein anderes flüssiges Arbeitsmedium verarbeitet werden. Falls das Aggregat mit mehreren Pumpenstufen ausgebildet ist, wird mit einer Niederdruckpumpenstufe bis zu einem moderaten Druck ein großes Fördervolumen abgegeben, und mit der Hochdruckpumpenstufe sehr hoher Druck bis z.B. bei 800 Bar bei kleinem Fördervolumen erzeugt.

Der Erfindung liegt die Aufgabe zugrunde, ein speziell für mobile Einsatzzwecke geeignetes elektrohydraulisches Motorpumpenaggregat der eingangs genannten Art zu schaffen, das baulich einfach ist, bei dem sich trotz eines einzuhaltenden Gewichtslimits ein großes Ölreservoir verwirklichen lässt.

Die gestellte Aufgabe wird mit den Merkmalen des Anspruchs 1 gelöst.

Herstellungstechnisch einfach und im Hinblick auf optimale Nutzung der sich aufgrund anderer Vorgaben ergebenden Gehäuseabmessungen ist der Statorwicklungsteil des Drehstrom- oder Wechselstrommotors in unmittelbarer Anlage an der Gehäuseinnenwand eingeschrumpft oder eingepresst. Dies ermöglicht eine einfache Montage, gewährleistet einen intensiven Wärmeübergang in das Gehäuse, und lässt einen großen Statorwicklungsteil-Außendurchmesser zu. Jedoch ist die Axiallänge des Statorwicklungsteils bewusst so kurz, dass sie zum Innendurchmesser des Gehäuses in einem Verhälntis von etwa 1 : 2 bis 1 : 3 steht. Dies hat für die mobile Einheit erhebliche Vorteile. Es wird erheblich Gewicht eingespart, weil der Elektromotor insgesamt um 30 bis 40 % leichter wird und auch das Aggregat um bis zu 15 % leichter gebaut werden kann, als mit einem Standardmotor und da der kurze Statorwicklungsteil trotz eines großen nutzbaren Volumens für das Ölreservoir ein kürzeres und leichteres Gehäuse ermöglicht. Dies führt zu einem kompakten Aggregat, das tragbar ist und das Gewichtslimit von beispielsweise 25 kg leicht einhalten lässt. Der kurze Statorwicklungsteil, bei dem beispielsweise gegenüber einem Standard-Statorwicklungsteil gleichen Durchmessers mehrere Blechplatten, weggelassen worden sind, ist zwar in elektrischer Hinsicht kein Optimum. Dies wird aber im Hinblick auf die Tragbarkeit des Aggregats bewusst in Kauf genommen, und führt dazu, dass die Leistungsaufnahme niedriger ist und im Einsatz normale Absicherungen für 16A bzw. 30A durch den Anlaufstrom nicht ausgelöst werden. Dies ist ein Leichtbaukonzept in eine elektrotechnisch und maschinenbaulich unübliche Richtung, zugunsten der Tragbarkeit und der kostengünstigen Herstellung.

Konkret sollte der Statorwicklungsteil ein Verhältnis seines Außendurchmessers D zur Axiallänge L bis haben, das deutlich größer ist, als bei Statorwicklungsteilen von Standardelektromotoren, für die sich ein Verhältnis D : L zwischen etwa 1,9 : 1 bis 1 : 1 oder sogar kleiner als zweckmäßig bewährt hat. Beispielsweise hätte ein Standardelektromotor für einen Innendurchmesser von 145 mm einen Statorwicklungsteil mit einer Länge von mindestens 95 mm für eine Dauerbetriebs-Leistung von 2,2 KW, während der kurze Statorwicklungsteil in diesem Aggregat bei einem Außendurchmesser von 145 mm nur eine Axiallänge von 70 mm oder weniger hat (D : L etwa 2,1 : 1), was zu einer Dauerbetriebsleistung von etwa 1,5 KW führt.

Um für das Aggregat unterschiedliche Auslegungen, aufbauend auf gleichen Komponenten, zu ermöglichen, lässt sich der Tragkörper in unterschiedlichen Drehstellungen relativ zum Gehäuse und zu einem Gehäuseteil einbauen. Mit den gleichen Komponenten lassen sich Aggregate für unterschiedliche Einsatzbedingungen schaffen.

Alternativ wird die Variabilität des Aggregats mit Hilfe eines Tragkörper-Bausatzes erweitert, von dem jeweils ein bestimmter Tragkörper eingebaut wird. Um das Aggregat an bestimmte Verbraucheranforderungen anzupassen oder unterschiedliche Pumpenarten oder Pumpengrößen einzubauen, braucht nur der jeweils passende Tragkörper aus dem Tragkörpersatz verwendet zu werden. Dies ermöglicht es, baukastenartig Aggregate für unterschiedliche Anforderungen aufzubauen.

Vorteilhaft treibt der Elektromotor eine Hochdruckstufe und eine Niederdruckstufe gleichzeitig an. Die Niederdruckstufe ermöglicht eine große Fördermenge bei relativ geringem Druck, während die Hochdruckstufe bei kleinerer Fördermenge das Erreichen und Halten hoher Drücke, z.B. bis zu 800 Bar, zulässt. Es könnten auch zwei Hochdruck- oder Niederdruckstufen oder nur eine Hochdruck- oder Niederdruckstufe vorgesehen sein. Als Niederdruckstufe dient wenigsten eine am Tragkörper montierte Zahnradpumpe, die sich durch einen hohen Gleichförmigkeitsgrad bei der Förderung auszeichnet, leise läuft und langlebig ist. Wenigstens eine Radialkolbenpumpe in der Hochdruckstufe lässt auch extrem hohe Drücke problemlos erreichen, beansprucht in Richtung der Pumpenwelle geringe Bauhöhe, und lässt die erwähnten Höchstdrücke mit relativ geringem Leistungseinsatz erzielen. Radialkolbenpumpen sind darüber hinaus preiswert und langlebig.

Ein Ölstands-Schauglas im Randbereich des Gehäuseteils lässt eine visuelle Ölstandskontrolle jederzeit zu. Die exponierte Lage des Schauglases im Randbereich gestattet es, das Schauglas aus unterschiedlichen Sichtwinkeln einzusehen. In dem gerundeten oder abgeschrägten Randbereich ist das Schauglas geschützt untergebracht, was wichtig ist, weil das Aggregat beim Handhaben bzw. Transport häufig gerade mit den endseitigen Rändern mit Hindernissen kollidiert. Die Randgestaltung zum Schutz des Schauglases ist gegen Schäden aus solchen Kollisionen zweckmäßig.

Anhand der Zeichnung werden Ausführungsformen des Erfindungsgegenstandes erläutert. Es zeigen:
- Fig. 1: einen Längsschnitt eines elektrohydraulischen Motorpumpenaggregates,
- Fig. 2: eine Stirnansicht in Fig. 1 von links,
- Fig. 3: eine Draufsicht auf das Aggregat von Fig. 1,
- Fig. 4: einen Querschnitt in der Ebene IV-VI von Fig. 1,
- Fig. 5: einen weiteren Querschnitt in der Ebene V-V von Fig. 1,
- Fig. 6: einen Teil eines Querschnitts, ähnlich dem von Fig. 5, für eine Detailvariante, und
- Fig. 7: einen Längsschnitt einer weiteren Ausführungsform eines elektrohydraulischen Motorpumpenaggregats.

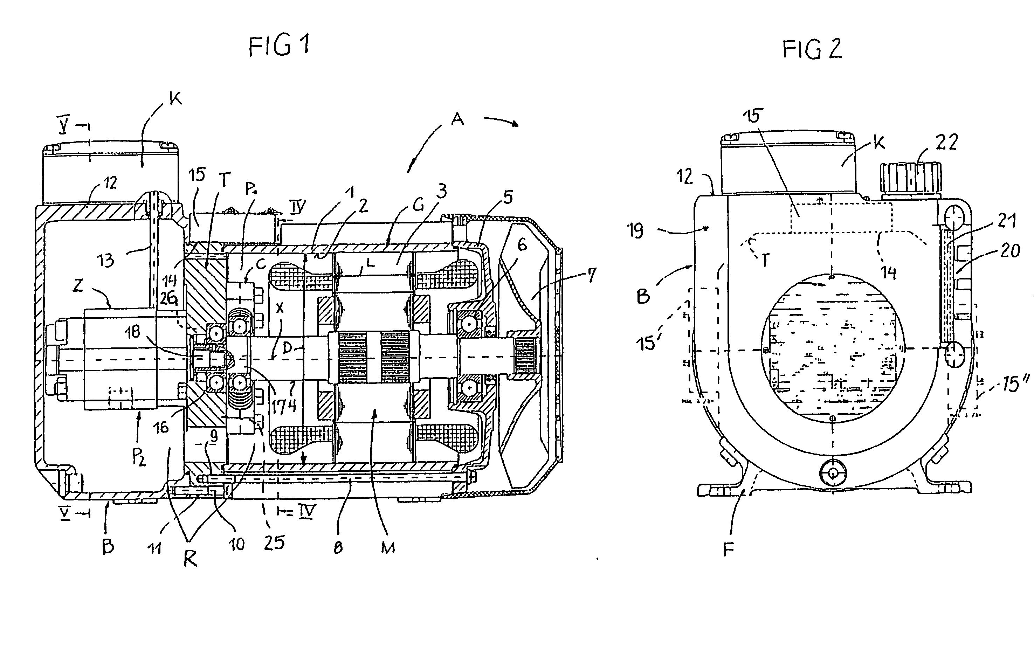

Ein tragbares elektrohydraulisches Motorpumpenaggregat A ist in den Fig. 1 bis 5 für eine liegende Betriebsstellung konzipiert. Das Aggregat A kann, gegebenenfalls mit geringfügigen Modifikationen, auch stehend betrieben werden.

Hauptkomponenten des Aggregats A sind ein einen Unteröl-Elektromotor M aufnehmendes Gehäuse G, das abnehmbar an einem eine Motorwelle 4 lagernden Tragkörper T festgelegt ist, ein an der anderen Seite des Tragkörpers T festgelegter Gehäuseteil B, vom Elektromotor M antreibbare Pumpenstufen P1 und P2 an dem Tragkörper T, und ein von der Motorwelle 4 antreibbares Kühlgebläserad 7.

Das Gehäuse G ist ein außenseitig verripptes Leichtmetall-Rohr 1 mit einer zylindrischen Innenwand 2 mit einem Innendurchmesser D, an der ein Statorwicklungsteil 3 des Elektromotors M direkt anliegt, der in das Gehäuse G eingeschrumpft oder eingepresst ist. Der Elektromotor M ist ein Wechselstrom- oder Drehstrommotor. Die in Richtung der Achse X der Motorwelle 4 gesehene Länge L des Statorwicklungsteils 3 ist verkürzt, vorzugsweise um 30 bis 40 %, gegenüber der normalen Länge eines Statorwicklungsteils 3 eines Standardmotors für den Innendurchmesser D.

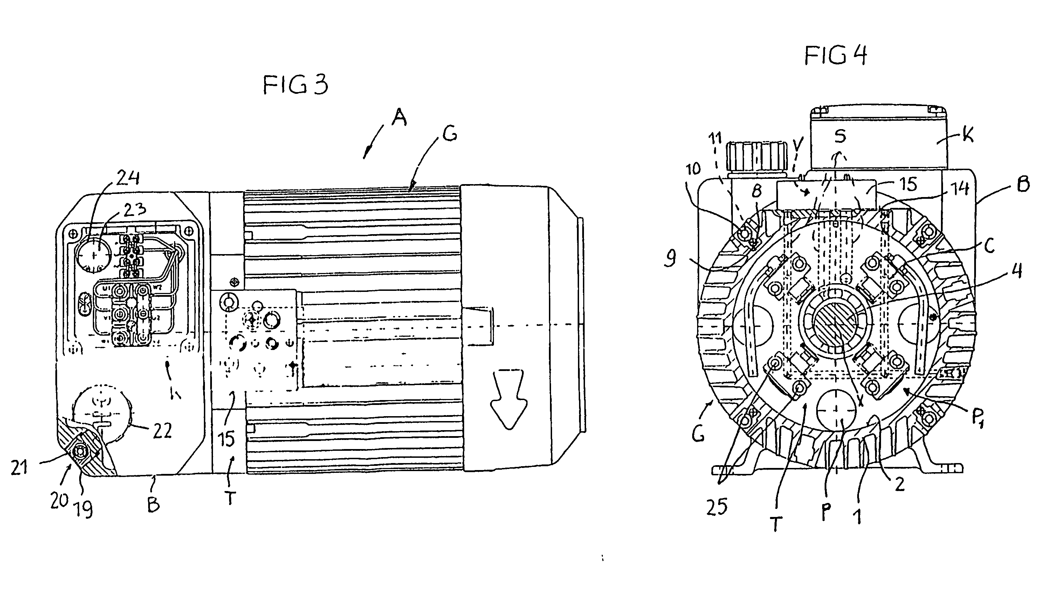

In einem Gehäuse-Deckel 5 ist ein Lager 6 für die Motorwelle 4 angeordnet. Das Gehäuse G ist mit Spannschrauben 8 in Befestigungseinnchtungen 9 (Gewindebohrungen) des Tragkörpers T festgelegt. Der Tragkörper T kann aus Leichtmetall oder Stahl bestehen, hat die Form einer Scheibe und wird in einem Lager 16 von der Motorwelle 4 durchsetzt Der Gehäuseteil B hat in Fig. 2 U-förmigen Umriss mit einer ebenen bzw. gestuften Oberseite 12, auf der ein Klemmenkasten K angebracht ist, von dem aus ein Versorgungskabel 13 durch den Behälterteil B, eine Ölpassage P im Tragkörper T und dann zum Elektromotor M verlegt ist. Der Behälterteil B begrenzt mit dem Behälter G ein Ölreservoir R.

Der Behälterteil B ist am Tragkörper T mit Spannschrauben 10 festgelegt, die Befestigungseinrichtungen 11 des Tragkörpers T durchsetzen. Der Außenumfang des Tragkörpers T liegt zwischen dem Gehäuse G und dem Behälterteil B frei. Dort ist eine Anschlussfläche 14 vorgesehen, auf der ein Verteilerblock 15 festlegbar ist, in welchem ein Druckumschaltventil V (Fig. 4) untergebracht sein kann. Im Tragkörper T sind Ölkanäle S vorgesehen, die an die Pumpenstufen P1, P2 angeschlossen sind.

In Fig. 1 und 4 ist die Pumpenstufe P1 eine Hochdruckstufe mit mehreren, um die Motorwelle 4 verteilten Radialkolbenpumpen C, die Öl aus dem Ölreservoir R direkt oder über Ansaugrüssel aufnehmen. Die Radialkolbenpumpen C werden angetrieben durch einen an der Motorwelle 4 geformten (oder dort angeordneten) Exzenter 17 und sind mit Befestigungsschrauben an Montierpositionen 25 im Tragkörper T festgelegt.

Die zweite, im Behälterteil B montierte Pumpenstufe P2 ist eine Zahnradpumpe Z, die mit Spannschrauben an Montierpositionen 26 in dem Tragkörper T festgelegt ist. Der Ansauganschluss der Zahnradpumpe Z weist nach unten. Eine Antriebswelle 18 der Zahnradpumpe Z ist in die Motorwelle 4 eingesteckt.

In Fig. 2 und 3 ist in einem endseitigen Rand 19 des Behälterteils B ein Ölstands-Schauglas 21 einer Ölstands-Kontrollvorrichtung 20 versenkt angeordnet. Der Rand 19 ist abgerundet oder abgeschrägt. Das Ölstands-Schauglas 21 liegt so, dass es sowohl in Blicknchtung in Richtung der Motorwelle 4 als auch quer dazu abgelesen werden kann.

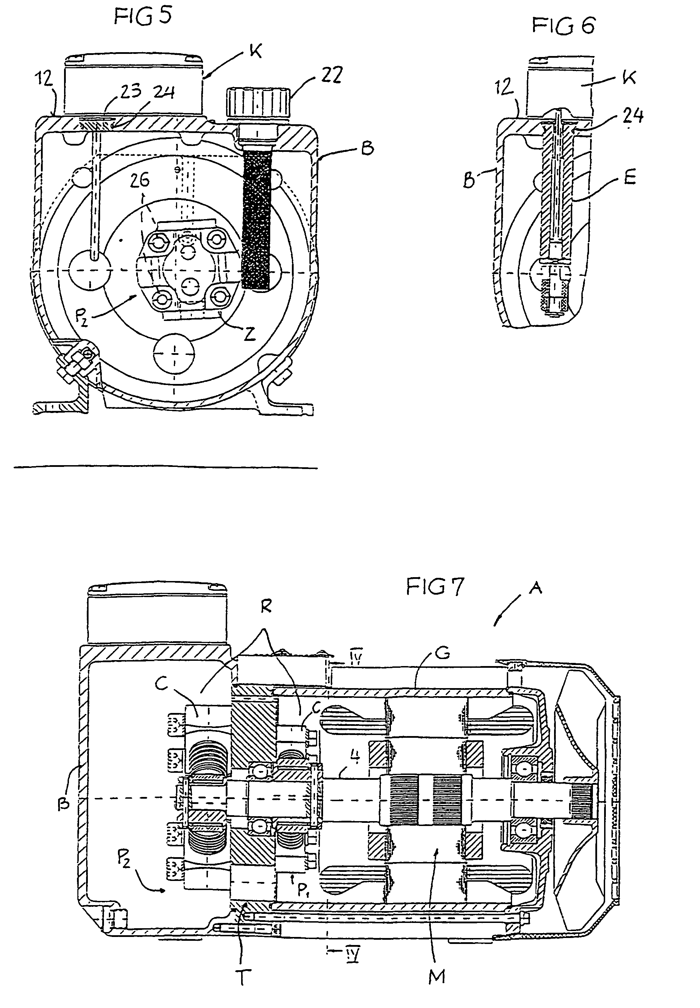

In Fig. 3 sind im Klemmenkasten Anschlussklemmen zusammengefasst. In Fig. 5 ist, z.B. in Verbindung zum Inneren des Klemmenkastens K, in der Oberseite 12 des Gehäuseteils B ein Sitz 24 vorgesehen, der durch einen Blindstopfen 23 verschlossen ist, solange er nicht zum Anbringen eines Sensors benutzt wird. In Fig. 6 ist in den Sitz 24 anstelle des Blindstopfens 23 ein Temperatursensor und/oder Schwimmerschalter E eingesetzt. In der Oberseite 12 des Gehäuseteils B ist eine mit einem Filter ausgestattete Einfüllvorrichtung 22 vorgesehen.

Die Befestigungseinnchtungen 9, 11 für die Spannschrauben 10, 8 des Gehäuses G und des Gehäuseteils B sind in Fig. 2, 4 konzentrisch zur Achse X der Motorwelle 4 und in regelmäßigen Umfangsabständen im Tragkörper T vorgesehen. Dies gestattet es, den Tragkörper T in mehreren unterschiedlichen Drehstellungen bezüglich des Gehäuseteils B und des Gehäuses G einzusetzen. Dies kann zweckmäßig sein, um den Anschlussblock 5 aus Platzgründen oder aus Anschlussgründen oben oder an einer oder der anderen Seite des Aggregats zu haben, so wie dies durch 15, 15', 15" in Fig. 2 angedeutet ist.

In Fig. 7 sind beide Pumpenstufen P1 und P2 Radialkolbenpumpen C, die in Gruppen um die Motorwelle 4 verteilt am Tragkörper T festgelegt sind. Der Tragkörper T unterscheidet sich nur durch die zu diesen Radialkolbenpumpen C passenden Montierpositionen 25, 26 vom Tragkörper T mit den Montierpositionen 25, 26 der Fig. 4, 5. Die Befestigungseinrichtungen 9, 11 für die Spannschrauben 8, 10 sind hingegen bei beiden Tragkörpern in den Fig. 1 und 7 identisch. Dadurch ist es möglich, je nach Bestückung des Aggregats mit unterschiedlichen Pumpenarten und/oder Pumpengrößen den jeweils hinsichtlich der Montierpositionen 25, 26 passenden Tragkörper T aus einem Bausatz mit den ansonsten unveränderten weiteren Komponenten des Aggregats zu kombinieren.

Da auf dem Verteilerblock hydraulische Steuer- und/oder Regelkomponenten oder Überwachungseinrichtungen montiert werden, die relativ weit ausladen können, ist es zweckmäßig, gemäß Fig. 2 den Tragkörper T in unterschiedlichen Drehstellungen bezüglich der Achse X einzubauen, um den jeweiligen Einbaugegebenheiten Rechnung zu tragen.

Das elektrohydraulische Motor-Pumpenaggregat A in den Fig. 1 bis 7 ist in eine tragbare Baueinheit, z.B. für ein hydraulisches Werkzeug, die nur 20 oder 25 kg schwer ist. Der Elektromotor M mit dem verkürzten Statorwicklungsteil 3 ist leistungsfähig genug, um hohe Arbeitsdrücke bis zu 800 bar und mehr sicherzustellen, und zwar auch im mobilen Einsatz, bei dem im Regelfall der nutzbare Versorgungsstrom beschränkt ist, z.B. durch 16A-Sicherungen bei ~230 V (bzw. 30A-Sicherungen bei 110 V).

Bei einem Innendurchmesser D von 145 mm hat der Statorwicklungsteil 3 eine Länge L von nur 70 mm. Damit hat der Elektromotor eine Dauerbetriebsleistung von ca. 1,5 KW. Das Verhältnis D : L kann in einem Bereich zwischen etwa 2 : 1 bis 3 : 1 variieren, im Vergleich zu einem Bereich für D : L von ca. 1,9 : 1 bis 1 : 1 oder weniger bei Statorwicklungsteilen von Standard-Motoren. Die verkürzte Länge wird z.B. dadurch erzielt, dass vom Blechpaket eines Standard-Statorwicklungsteils eine entsprechende Anzahl der Bleche entfernt oder weggelassen wird.

## Patentansprüche

1. Elektrohydraulisches Motorpumpenaggregat (A) für Dauerbetrieb, mit einem ein Ölreservoir (R) begrenzenden Gehäuse (G), das einen zumindest teilweise im Öl (O) angeordneten Unteröl-Elektromotor (M) enthält, dessen Statorwicklungsteil (3) freiliegend an der Innenwand des Gehäuses abgestützt ist, und mit einem in das Gehäuse (G) eingegliederten, eine Motorwelle (4) stützenden Tragkörper (T), an dem mindestens eine von der Motorwelle antreibbare Pumpenstufe (P1, P2) angeordnet ist, **dadurch gekennzeichnet, dass** der Statorwicklungsteil (3) des als Wechselstrom- oder Drehstrommotor ausgebildeten Elektromotors (M) in unmittelbarer Anlage an der Gehäuseinnenwand in das Gehäuse (G) eingeschrumpft oder eingepresst ist, und dass die Axiallänge (L) des Statorwicklungsteils (3) zum Innendurchmesser (D) des Gehäuses (G) in einem Verhältnis von etwa 1 : 2 bis 1 : 3 steht.

2. Elektrohydraulisches Motorpumpenaggregat nach Anspruch 1, **dadurch gekennzeichnet, dass** die Axiallänge (L) des Statorwicklungsteils (3) für den auf eine Dauerbetriebsleistung von etwa 1,5 kW ausgelegten Elektromotor (M) bei einem Innendurchmesser (D) des Gehäuses (G) von etwa 145 mm etwa 70 mm oder weniger beträgt.

3. Elektrohydraulisches Motorpumpenaggregat nach Anspruch 1, **dadurch gekennzeichnet, dass** im Tragkörper (T) zur Achse (X) der Motorwelle (4) konzentrische Befestigungseinrichtungen (9, 11) zum Festlegen des Gehäuses (G) und eines Gehäuseteils (B) in regelmäßigen Umfangsabständen vorgesehen sind, und dass der Tragkörper (T) in mindestens zwei verschiedenen, auf die Achse (X) bezogenen Drehstellungen (15, 15', 15") wahlweise mit dem Gehäuse (G) und dem Gehäuseteil (B) verbindbar ist.

4. Elektrohydraulisches Motorpumpenaggregat nach Anspruch 1, **dadurch gekennzeichnet, dass** das Gehäuse (G) und ein Gehäuseteil (B) an dem einen Tragkörper (T) aus einem aus mehreren Tragkörpern (T) bestehenden Bausatz befestigt sind, und dass die mehreren Tragkörper (T) des Bausatzes identische Befestigungseinrichtungen (9, 11) und unterschiedliche Montierpositionen (25, 26) zum Anbringen unterschiedlicher Pumpenarten und/oder Pumpengrößen der Pumpenstufen (P1, P2) aufweisen.

5. Elektrohydraulisches Motorpumpenaggregat nach Anspruch 1, **dadurch gekennzeichnet, dass** eine Hochdruckstufe (P1) und eine Niederdruckstufe (P2) vorgesehen sind, dass die Niederdruckstufe (P2) wenigstens eine im Gehäuseteil (B) am Tragkörper (T) montierte Zahnradpumpe (Z) und die Hochdruckstufe (P1) an der dem Elektromotor (M) zugewandten Seite des Tragkörpers (T) wenigstens eine Radialkolbenpumpe (C), vorzugsweise eine Gruppe von um die Motorwelle (4) verteilten Radialkolbenpumpen (C), aufweisen.

6. Elektrohydraulisches Motorpumpenaggregat nach Anspruch 3 oder 4, **dadurch gekennzeichnet, dass** der endseitige Rand (19) des Gehäuseteils (B) zumindest bereichsweise gerundet oder abgeschrägt ist und dass ein versenktes Ölstands-Schauglas (21) in diesem gerundeten oder abgeschrägten Bereich angeordnet ist.

## Claims

1. Electrohydraulic motor pump unit (A) for continuous operation, having a housing (G) which bounds an oil reservoir (R) and contains an oil-submerged electric motor (M) which is arranged at least partially in the oil (O) and whose stator winding part (3) is supported lying freely on the inner wall of the housing, and having a supporting body (T) which is introduced into the housing (G), supports a motor shaft (4) and on which at least one pump stage (P1, P2) which can be driven by the motor shaft is arranged, **characterized in that** the stator winding part (3) of the electric motor (M), which is in the form of an AC motor or three-phase motor, is shrunk or pressed into the housing (G) such that it is in direct contact with the housing inner wall, and **in that** the ratio of the axial length (L) of the stator winding part (3) to the internal diameter (D) of the housing (G) is about 1:2 to 1:3.

2. Electrohydraulic motor pump unit according to Claim 1, **characterized in that** the axial length (L) of the stator winding part (3) for the electric motor (M) which is designed for a continuous operating power of about 1.5 kW is about 70 mm or less, for an internal diameter (D) of the housing (G) of about 145 mm.

3. Electrohydraulic motor pump unit according to Claim 1, **characterized in that** attachment devices (9, 11), which are concentric with respect to the axis (X) of the motor shaft (4), are provided in the supporting body (T) in order to fix the housing (G) and a housing part (B) at regular circumferential intervals, and **in that** the supporting body (T) can optionally be connected to the housing (G) and to the housing part (B) in at least two different rotation positions (15, 15', 15") with respect to the axis (X).

4. Electrohydraulic motor pump unit according to Claim 1, **characterized in that** the housing (G) and a housing part (B) are attached to one supporting body (T) of a set comprising two or more supporting bodies (T), and **in that** the two or more supporting bodies (T) in the set have identical attachment devices (9, 11) and different mounting positions (25, 26) for fitting different pump types and/or pump sizes for the pump stages (P1, P2).

5. Electrohydraulic motor pump unit according to Claim 1, **characterized in that** a high-pressure stage (P1) and a low-pressure stage (P2) are provided, **in that** the low-pressure stage (P2) has at least one geared pump (Z) which is mounted in the housing part (B) on the supporting body (T), and the high-pressure stage (P1) has at least one radial piston pump (C), and preferably a group of radial piston pumps (C) distributed around the motor shaft (4), on the side of the supporting body (T) facing the electric motor (M).

6. Electrohydraulic motor pump unit according to Claim 3 or 4, **characterized in that** the end edge (19) of the housing part (B) is rounded or inclined at least in places, and **in that** a recessed oil level sightglass (21) is arranged in this rounded or inclined area.

## Revendications

1. Groupe moto-pompe électro-hydraulique (A) pour service continu, comportant un carter (G) limitant un réservoir d'huile (R), qui contient un moteur électrique (M) immergé au moins partiellement dans de l'huile (O), dont la partie de bobine de stator (3) est en appui reposant librement sur la paroi intérieure du carter, et comportant un corps porteur (T) portant un arbre moteur (4) intégré dans le carter (G), sur lequel est disposé au moins un étage de pompe (P1, P2) pouvant être entraîné par l'arbre moteur, **caractérisé en ce que** la partie de bobine de stator (3) du moteur électrique (M), réalisé en moteur à courant alternatif ou à courant triphasé, est insérée ou enfoncée de manière directement accolée à la paroi intérieure dans le carter (G), et que la longueur axiale (L) de la partie de bobine de stator (3) est à un rapport d'environ 1:2 à 1:3 au diamètre intérieur (D) du carter (G).

2. Groupe moto-pompe électro-hydraulique selon la revendication 1, **caractérisé en ce que** la longueur axiale (L) de la partie de bobine de stator (3) pour le moteur électrique (M), conçu pour une puissance de service continu d'environ 1,5 kW, est d'environ 70 mm ou moins, pour un diamètre intérieur (D) d'environ 145 mm du carter (G).

3. Groupe moto-pompe électro-hydraulique selon la revendication 1, **caractérisé en ce que** des dispositifs de fixation concentriques (9, 11) par rapport à l'axe (X) de l'arbre moteur (4) sont prévus à intervalles périphériques réguliers dans le corps porteur (T) pour fixer le carter (G) et une partie de carter (B) et que le corps porteur (T) peut être assemblé au carter (G) et à la partie de carter (B), dans au moins deux positions de rotation (15, 15', 15") différentes par rapport à l'axe (X).

4. Groupe moto-pompe électro-hydraulique selon la revendication 1, **caractérisé en ce que** le carter (G) et une partie de carter (B) sont fixés au corps porteur (T) d'un module de construction constitué de plusieurs corps porteurs (T) et que les plusieurs corps porteurs (T) du module de construction présentent des dispositifs de fixation (9, 11) identiques et différentes positions de montage (25, 26) pour monter différents types de pompes et/ou tailles de pompes des étages de pompes (P1, P2).

5. Groupe moto-pompe électro-hydraulique selon la revendication 1, **caractérisé en ce qu'**un étage haute pression (P1) et un étage basse pression (P2) sont prévus, que l'étage basse pression (P2) présente au moins une pompe à engrenage (Z) montée dans la partie de carter (B) sur le corps porteur (T) et l'étage haute pression (P1) au moins une pompe à piston radial (C), de préférence un groupe de pompes à piston radial (C) réparties autour de l'arbre moteur (4), sur le côté du corps porteur (T) tourné vers le moteur électrique (M).

6. Groupe moto-pompe électro-hydraulique selon la revendication 3 ou 4, **caractérisé en ce que** le bord (19) du côté de l'extrémité de la partie de carter (B) est arrondi ou biseauté au moins par sections et qu'un regard de niveau d'huile (21) affleurant est disposé dans cette zone arrondie ou biseautée.
